# EUROPEAN PATENT APPLICATION

(11) **EP 4 381 944 A1**
(43) Date of publication of application: **12.06.2024**
(21) Application number: 22211831.7
(22) Date of filing: 06.12.2022
(51) Int. Cl.: A01N 1/02, A23B 4/24, A23B 4/26, A23L 3/358

(54) **APPARATUS AND METHOD OF TREATING AND PRESERVING FOODS WITH CARBONATED WATER**

(71) Applicant: BWT Italia S.r.l., 20122 Milano (MI) (IT)
(72) Inventor: SANTANDREA, Marco, 20122 Milano (IT)
(74) Representative: Cammareri, Emanuele

(57) **Abstract**

Apparatus and method for treating and preserving food with carbonated water in a tank in a simple, automatic and low-cost manner, wherein the quality of the carbonated water in terms of temperature and pH are controlled by a control unit, said apparatus comprises a first loop for supplying carbonated water in a tank and a second loop for filtering the carbonated water from undesired substances.

## Description

### FIELD OF THE INVENTION

The present invention concerns an apparatus and a process for treating and preserving food with carbonated water. In particular, the invention relates to an apparatus and a process for ageing meat by immersion in carbonated and chilled water. According to another aspect, the invention relates to an apparatus and a method for preserving and treating fish products, preferably molluscs and crustaceans.

### PRIOR ART

The meat ageing is a technical process typically used in butchery practices, the purpose of which is to soften the meat fibres and ensure a pleasant taste.

This process is typically performed immediately after the slaughtering of the animal. In fact, after the slaughtering of the animal, the meat of the animal undergoes alterations due to biological and chemical/physical reactions leading to natural stiffening of its fibres.

The term "meat" means herein what is identified, excluding blood and internal organs of animals, in the REGULATION (EC) No. 853/2004
of 29 April 2004. In detail, "meat" means here all edible parts, excluding the blood and internal organs of the animals listed in the following categories: domestic ungulates: bovine animals, buffaloes, bison, swine, sheep, goats and domestic horses; poultry: farmed birds, even if not domestic, with the exception of ratites (ostriches and the like); lagomorphs: rabbits, hares and rodents; game comprising ratites and similar "farmed game".

The ageing arts applied are multiple and are divided into ageing that take place in aerobic environment or in anaerobic environment.

With the technique in aerobic environment, the meat is kept in a refrigerated environment, typically a cell, for periods of time varying from a few days to several weeks.

In anaerobic environment, i.e. devoid of oxygen, the meat ageing techniques are multiple, e.g., wet ageing is a technique that is obtained by inserting the meat into an envelope and reducing the oxygen inside the envelope. This technique allows to keep the meat liquids and respective moisture without losing weight.

Other anaerobic ageing techniques take place by using, e.g., fats, butter, honey and wine vinegar.

There is a further technique known as ageing by using carbonated water, i.e. water comprising carbon dioxide. This ageing technique is also anaerobic. This technique consists of immersing the meat to be aged in a tank containing water and carbon dioxide.

The technique of ageing meat with carbonated water allows to obtain meat particularly tender and without loss of flavour. This treatment can last from 3 to 4 weeks or only a few days or hours if the meat has already received partial ageing in refrigerating room.

Currently, the process of ageing with water with carbon dioxide takes place by using microbubbles' diffusers that require a high gas amount or by using bottled carbonated water. This technique, although apparently simple, is currently managed empirically by the individual user and is therefore complex and costly to implement as it involves, e.g., a high consumption of carbon dioxide and high ageing times.

The term "fish products" means herein fishes, such as e.g. freshwater or saltwater fish, or molluscs, such as e.g. squid, musky octopus, octopus, cuttlefish, bobtail squid and flying squid, sea snail, murex and limpet, grooved razor shell, Mediterranean scallop, smooth clam, mytilus or mussel, oyster, warty venus, tellina and clam or crustaceans, such as e.g. lobster, homarus, prawn and scampi, brachyura, Squilla mantis.

Currently, in the methods for preserving and treating fish products, once they have been caught and have undergone the blast freezing process in order to preserve them at low temperatures, fish products still undergo a degradation process that causes the ammonia production which can cause alteration in the taste and texture of fish products.

Typically, in order to reduce the presence of ammonia, fish products are treated with white vinegar which allows to reduce the amount of ammonia but still leading to alteration in taste. Alternatively, sodium bicarbonate may be used to reduce the presence of ammonia, which in order to neutralise the action of ammonia, it must act for a long period, e.g. a period of about one day.

### SUMMARY OF THE INVENTION

Object of the present invention is to solve the above-mentioned problems and to provide an apparatus and a process for treating and preserving food with carbonated water in a simple, automatic and low-cost manner.

Further object of the present invention is to provide an apparatus and a method for ageing meat with carbonated water, which allow to obtain edible meat that is tender, tasty and with improved organoleptic characteristics compared to known techniques with reduced carbon dioxide consumption.

Further object of the present invention is to provide an apparatus and a method for preserving and treating fish products, preferably molluscs and crustaceans, in order to reduce the amount of ammonia produced during the degradation process by means of carbonated water, increasing the preservation time of the fish products before consumption and without causing alteration in taste and appearance.

These and other purposes are achieved by the present invention by means of a method and an apparatus according to one or more of the accompanying claims.

In particular, object of the present invention is an apparatus and a method according to the independent claims. Preferred aspects are set forth in the dependent claims.

According to an aspect of the present invention, an apparatus for treating and preserving food by means of carbonated water comprises a tank adapted to contain carbonated water and one or more food portions. The carbon dioxide present in the carbonated water is in the aqueous solution, i.e. according to the presence of CO2, HCO3-, CO3--, H2CO3 and possible combinations thereof.

The tank can be designed with variable dimensions depending on the amount of food that must be subjected to the treatment and preservation and is made with materials suitable for possible contact between the walls of the tank and the food in order to minimise the possibility of altering the chemical-biological characteristics of food during treating. Examples of materials suitable for contact between the walls of the tank and food comprise stainless steel. The tank can be further insulated and also protected externally by anti-condensation barrier. Examples of material used as anti-condensation barrier are synthetic rubber materials such as e.g. neoprene.

The apparatus further comprises a refrigeration unit. Typically, a refrigeration unit comprises at least one compressor of a type known per se in the art. In an implementation, the refrigeration unit comprises a hermetically sealed compressor, a condenser and a capillary tube, which are known in the art. The capillary tube is typically a small diameter tube in which a refrigerant liquid flows, which allows the pressure level of the refrigerant liquid exiting the condenser to be lowered by minimising the energy exchange between the walls of the capillary tube and the liquid, which is followed by minimisation of the time necessary for reducing the temperature of the refrigerant liquid exiting the refrigeration unit.

The apparatus further comprises a control unit.

The control unit comprises a processor, a display and an algorithm processing program. The control unit is configured to compare the temperature values of the carbonated water measured inside the tank with pre-set temperature values stored in the control unit, to compare the pH values of the carbonated water, which are measured inside the tank with the pre-set pH values stored in the control unit and to activate, following the results of the comparisons made, the refrigeration unit or the means for supplying carbonated water to the tank.

The control unit allows the processing of electric signals, such as voltage or electric currents entering the control unit in order to be processed and to allow the quality control of the carbonated water present in the tank, such as e.g. temperature, pH and volume of carbonated water in the tank.

The control unit is capable of performing instructions by means of algorithms stored in the same control unit which allow to monitor the temperature, pH and volume of the carbonated water in the tank. The control unit further allows the supply of carbonated water in the tank to be controlled and to ensure an adequate level of cleanliness of the carbonated water in the tank by removing undesired biological material, such as fat, bones and biological particles that may, e.g., detach from food when it is immersed in the carbonated water. Failure to remove undesired biological material portions floating in the carbonated water and in contact with air could lead to a process of decomposition of food proteins which could adversely affect the treating and preserving process.

The control unit has pre-set temperature values and pre-set pH values stored therein. The temperature values and pH values of the carbonated water in the tank are processed by the control unit by means of comparison with the temperature and pH values in order to control the supply of carbonated water in the tank and to ensure an adequate level of cleanliness of the carbonated water in the tank.

The control unit is further electrically connected to the refrigeration unit. The comparison inside the control unit of the pre-set temperature value with the measured temperature may then activate or deactivate the refrigeration unit in order to lower, i.e. decrease, the temperature of the carbonated water in the tank.

The apparatus further comprises at least one temperature sensor and at least one pH sensor which are configured to control the temperature and pH, respectively, of the carbonated water in the tank and connected to said control unit.

Advantageously, at least one temperature sensor allows the temperature of the carbonated water inside the tank to be measured. Said at least one temperature sensor is electrically connected to the control unit. Typically, said at least one temperature sensor consists of thermostats or other temperature sensors known in the art.

Advantageously, there is more than one temperature sensor, which allows to ensure the measurement of the temperature of the carbonated water in the tank even in the event that, in use, one of the temperature sensors should cease to function or is otherwise unable to ensure a correct measurement of the temperature of the carbonated water.

The apparatus of the invention comprises at least one pH sensor to measure the pH of the carbonated water inside the tank. The measured pH value is compared with the pre-set pH value range stored inside the control unit. In the event that the measured pH value is different from the pre-set pH value range, the control unit allows the carbonated water present in the tank to be removed and carbonated water to be supplied back to the tank by opening the solenoid valves present in the first loop, as described in more detail hereinafter.

The apparatus further comprises a first loop for supplying carbonated water to the tank, said first loop comprises water supplying means, an activated carbon filter, a first cooling element, a carbonator pump, a source of carbon dioxide and a saturator of water with carbon dioxide.

Advantageously, the first loop for supplying carbonated water to the tank can be at least partially immersed in the tank in the presence of carbonated water. However, solutions in which the first loop is positioned entirely outside the tank cannot be excluded.

Suitable water supplying means can be water supplying loops connected to the water mains (drinking water) or to natural water sources (natural source water).

The activated carbon filter, also of composite type, usually comprises a layer of activated carbon adhering to a filtering membrane. Examples of suitable and technically known activated carbon filters are, e.g., commercially available Pre-Coat filters.

Advantageously, the water used can then pass through the activated carbon layer for the removal of chlorine (sodium hypochlorite) which, as known, is typically added during the disinfecting treatments by the operator of aqueducts. The passage of water through the filtering membrane allows impurities in the water to be retained as undesired particles typically present in the water, which, if not filtered, could impart unpleasant odours and flavours to the carbonated water and consequently cause biological deterioration of food.

Advantageously, the activated carbon filter present in the first loop therefore ensures the absence of chlorine in the water.

The first cooling element may be placed inside the tank but this does not exclude embodiments in which the first cooling element is placed outside the tank.

Advantageously, the first cooling element allows to lower the temperature of the filtered water. The first cooling element may, e.g., be a coil tube in which the source water flows. The coil allows the heat exchange between the water flowing therein and the cooling fluid outside the coil.

The first cooling element can be made of a metal material, such as e.g. stainless steel. Advantageously, the cooling element may be positioned inside the tank or may be positioned outside the tank.

Advantageously, the cooling of water by the first cooling element allows carbon dioxide to be added as described by Henry's Law of gas solubilization in water, known in the art. Henry's law describes how the solubility of a gas in a liquid is inversely proportional to the temperature of the same liquid. In other words, the lower the temperature of the liquid, the greater the solubility of the gas in the liquid. Advantageously, this allows to minimise the amount of carbon dioxide necessary for the production of carbonated water.

Advantageously, the carbon dioxide source can be contained in special containers and is characterised by several volumes of carbon dioxide. Typically, the carbon dioxide source comprises appropriate pressure reducers and means for measuring the pressure of carbon dioxide exiting the carbon dioxide source, which are known in the art.

The saturator, also known in the art as carbonator, comprises a container in which water cooled under pressure by using a pump and carbon dioxide are supplied at the inlet. Cooled water that meets carbon dioxide is nebulized into the saturator. Advantageously, the saturator allows to produce carbonated water in which the amount of carbon dioxide can be regulated, and to maximise the mixing between carbon dioxide and cooled water by means of the generation of a turbulent flow. The saturator further comprises level sensors which allow to measure the volume of carbonated water produced inside the saturator.

Advantageously, the saturator is kept cooled, allowing to minimise the amount of carbon dioxide necessary for producing carbonated water and to facilitate the solubilization of carbon dioxide. For this purpose, the saturator may be positioned inside the tank or may be positioned outside the tank.

According to a possible aspect, the apparatus further comprises a second loop to recirculate the carbonated water present in the tank. The second loop comprises a hydraulic trap, a recirculation pump, at least one filtering element to separate undesired food portions and at least one disinfecting element to disinfect the recirculated carbonated water, preferably said disinfecting element is a UV-C ultraviolet lamp.

However, other non-chemical disinfecting means capable of not altering the flavours of the meat subjected to ageing are not excluded. Advantageously, the second loop for recirculating the carbonated water present in the tank allows to remove undesired food portions and other undesired harmful substances which reach the surface of the carbonated water in the tank also by flotation and which can be collected in the hydraulic trap. These undesired food portions, if not removed, could result in a process of decomposition of the treated food proteins and an alteration in the pH conditions of the carbonated water or could be harmful to the food treating and preserving process.

Advantageously, in order to remove portions of undesired food and other harmful substances, the second loop comprises a recirculation pump which allows to remove carbonated water containing the undesired substances. The recirculation pump further allows to have a high recirculation frequency.

Preferably, the recirculation pump has a flow rate that allows to have a carbonated water recirculation frequency in the second loop of at least 10 recirculations per hour.

The carbonated water and undesired substances are subjected to filtration by means of at least one filtering element which allows the undesired substances to be retained and removed from the carbonated water. The filtered carbonated water can then return to the tank.

Advantageously, the hydraulic trap is a device connected to the recirculation pump capable of intercepting the undesired food portions and preventing those undesired food portions from moving or floating freely inside the tank. These undesired food portions can then be removed from the tank by means of the recirculation pump. The hydraulic trap can be advantageously positioned in such a way as to be submerged in the carbonated water, e.g. by ensuring that there is a distance between the free surface of the carbonated water and the inlet section of the hydraulic trap in which the undesired food portions are collected. This distance can be between 10 mm and 15 mm.

Advantageously, the plurality of filtering elements allows to minimise the risk of alteration in the quality of the carbonated water present in the tank in terms of hygiene and further minimises the frequency with which the carbonated water is subjected to recirculation in the second loop and consequently allows to minimise the carbonated water necessary for food treating and preserving.

Advantageously, the filtering element for separating the undesired food portions from the carbonated water is a mesh or cloth or ultra-filtration filtering element and can be equipped with manual or automatic flushing in order to extract the undesired meat portions retained.

Advantageously, the means for disinfecting the recirculated carbonated water allow to
ensure the quality and hygiene of the carbonated water present in the tank.

In other words, before returning to the tank, the at least one disinfecting element allows the carbonated water to be disinfected, preferably by means of a UV-C lamp.

Advantageously, the recirculated carbonated water treated with disinfecting means, preferably a UV-C lamp, is typically characterised by an UV-C ultraviolet wavelength between 100 and 280 nanometres. As known in the art, this wavelength range allows to inactivate the harmful action of viruses, bacteria and other microorganisms.

Advantageously, the disinfecting means not only minimise the presence of viruses, bacteria and moulds in the carbonated water in contact with food, but also allow to minimise the refill of water to the tank via the first loop.

According to a possible aspect, the first loop comprises a first sensor, preferably a pressure switch, for checking the presence of water in said first loop. Advantageously, the presence of a first sensor allows an electric signal to be sent to the control unit about the lack of water necessary for producing carbonated water inside the first loop or may signal an abnormal pressure drop due to occlusion of the activated carbon filter in the water filtering process.

According to a possible aspect, the first loop comprises a second sensor, preferably a pressure switch, placed between said carbon dioxide source and said saturator for checking the presence of carbon dioxide from the carbon dioxide source.

Advantageously, the second sensor allows an electric signal to be sent to the control unit in the event that there is an amount of carbon dioxide in the carbon dioxide source too low to produce carbonated water in the saturator. Advantageously, in the event that the amount of carbon dioxide is too low, this anomaly can be signalled by an acoustic signal and/or a light signal.

According to a possible aspect, the apparatus further comprises a container placed in the tank in order to contain a plurality of food portions.

Advantageously, the container placed in the tank allows to contain food so as to avoid contact with the devices described above, such as e.g. temperature sensors, pH sensors, recirculation pumps and other devices which, if they come into contact with food, could hinder proper treating and preserving of food by means of carbonated water in the tank.

According to a possible aspect, the tank comprises a sensor for controlling the level of the carbonated water.

The sensor for controlling the level of the carbonated water may have an end that can be constrained to the wall of the tank while the end that allows the level of carbonated water to be controlled is free to float in carbonated water. The position of the floating element is transformed into an electric signal which is provided to the control unit as input. The control unit will then be able to compare this electric signal with a signal pre-set and stored in the control unit as the desired level.

This sensor for controlling the level of the carbonated water may be, e.g., a float switch, a level switch, level probes or another sensor known in the art.

Advantageously, the sensor for controlling the level of the carbonated water in the tank thus allows to provide an electric signal to the control unit in the event that the water level is lower than the desired volume. In the event that the water level is lower than the desired level, the control unit can provide an activation signal to activate the first loop in order to supply carbonated water to the tank until the sensor for controlling the level of the carbonated water measures a level equal to the desired level of carbonated water.

According to a possible aspect, the apparatus comprises an outlet conduit in the tank, a compensating reservoir or a waste conduit to prevent the overflow of the carbonated water from the tank and a bottom outlet conduit.

Advantageously, the outlet conduit in the tank allows the carbonated water to flow out by gravity from the tank towards the compensating reservoir in the event that the height level of the carbonated water is greater than the height at which the outlet conduit is positioned in the wall of the tank.

According to a possible aspect, the tank comprises a cooling evaporator and a stirrer to optimise the heat exchange between the evaporator and the carbonated water and to facilitate the displacement of undesired food portions towards the hydraulic trap.

The evaporator is a heat exchanger connected to the refrigeration unit, which may be in the form of plates or tube bundle. The evaporator allows the exchange of energy by conduction between the carbonated water present in the tank and the refrigerant liquid coming from the refrigeration unit and passing inside the evaporator.

Advantageously, the evaporator in the form of tube bundle, i.e. characterised by suitably spaced tubes, allows to optimise the contact between the carbonated water and the evaporator and allows easy cleaning of the tube bundle after the completion of the food treating and preserving process.

Advantageously, the evaporator may be positioned inside the tank so as to maximise the contact between the carbonated water and the evaporator, but embodiments in which the evaporator may be placed outside the tank are not excluded. Advantageously, the evaporator allows to minimise the variation in the temperature value of the carbonated water inside the tank, resulting in savings of carbonated water necessary for food treating and preserving. The evaporator may be made of metal material, preferably stainless steel.

According to a possible aspect, the apparatus comprises a sanitising element for cleansing the first loop and the second loop.

Advantageously, the sanitising element allows the first loop and the second loop to be cleansed so as to ensure an adequate level of hygiene inside the loops and to minimise the presence of germs, viruses or moulds that may form in the absence of sanitisation in the first loop and the second loop. The sanitising element is particularly advantageous for cleansing loop elements that would be particularly difficult for an operator to clean by hand. The sanitising element may be, e.g., a dosing station that comprises a dosing pump capable of dosing a sanitising solution, such as e.g. a hydrogen peroxide-based sanitising solution. Chlorine-based sanitising solutions should be excluded as they would not allow proper treatment and preservation of food by means of carbonated water.

According to a possible aspect, the apparatus comprises a grid for supporting the plurality of food portions.

Advantageously, the supporting grid allows to maximise the amount of food in the tank by means of carbonated water, minimising the contact between different food portions by restricting their movement or floating in the tank when they are submerged in carbonated water.

According to a possible aspect, the tank comprises an openable and insulated top lid, preferably made of glass.

Advantageously, the openable and insulated top lid allows the progress of the treatment and preservation of food inside the tank to be checked in use over a short period of time without, e.g., having to deactivate the control unit and/or the first carbonated water supplying loop and/or the second carbonated water recirculation loop.

A further aspect of the present invention relates to a method for ageing meat by means of carbonated water in a tank of an apparatus for ageing meat by means of carbonated water. The method comprises the steps of
(i) supplying said tank with carbonated water from a first loop, said water having temperatures and pH value which are pre-set and stored in a control unit or in storage means connected to said control unit;
(ii) monitoring the temperature and the pH value of the carbonated water in said tank by means of at least one temperature sensor and at least one pH sensor which are connected to said control unit;
(iii) keeping one or more portions of meat in the carbonated water in said tank at said temperature and said pH value for a period of time sufficient to reach the desired ageing;
(iv) comparing by means of said control unit, said measured pH value with said stored pH value or range of values, and supplying carbonated water to the tank from said first loop in the event that the carbonated water present in the tank has a measured pH value different from said one or said more desired and stored pH values;
(v) recirculating the carbonated water present in the tank through a second loop comprising at least one filtering element and at least one disinfecting element, preferably said disinfecting element is a UV-C ultraviolet lamp.

Advantageously, the meat ageing by means of carbonated water can be applied to different types of meat and allows to obtain meat with a low degree of stiffness, a pleasant flavour and without an alteration of the colour of the meat compared to when the meat was slaughtered.

Advantageously, the meat can be present as a single portion or, preferably, sectioned into several meat portions, e.g. as steaks, or reduced to small pieces to then be used after further mincing for sausage or hamburger production. The portioned meat will have a greater contact surface between the meat and carbonated water compared to whole pieces, thus allowing to optimise the ageing process.

Advantageously, during step (i) and step (iv), the control unit is capable of comparing the temperatures and the pH values which are measured with temperatures and pH values pre-set and stored in the control unit. This makes it possible to optimise the quality of the carbonated water present in the tank in terms of temperature and pH, which are essential parameters for the correct ageing of the meat in terms of stiffness, taste and aesthetic appearance of the meat, and allows to minimise the amount of carbonated water necessary for ageing the meat.

Advantageously, during step (v), the recirculation of carbonated water present in the tank through a second loop allows to minimise the contact of the meat in the tank with any substances and particles which could cause decomposition of the proteins and which could therefore adversely affect the chemical-biological processes of meat ageing.

According to a possible aspect, during step (i) or step (iv), in the first loop (a), the water coming from the supplying means is pressurised to pressure values between 5 and 10 bar, by means of a carbonator pump placed upstream of the saturator and downstream of the first cooling element.

The carbonator pump allows to increase the water pressure before flowing into the saturator.

Advantageously, the pressurisation of the water by means of a carbonator pump upstream of the saturator allows to optimise the contact between previously filtered and cooled water and the carbon dioxide and the mixing of carbon dioxide with the water according to Henry's law, whereby as the pressure to which a liquid is subjected increases, the ability of the carbon dioxide to dissolve in the liquid increases.

Advantageously, the saturation pump can be activated by the control unit based on the water levels present in the saturator.

According to a possible aspect, the pre-set temperature value of the water is between 3.0 °C and 6.0 °C, preferably between 4 °C and 4.5°C.

According to a possible aspect, the pre-set pH value of water is between 2.5 and 4.0, preferably between 3 and 3.5.

According to a possible aspect, the carbonated water has hardness between 10 °F and 30 °F, preferably between 13 °F and 28 °F and contains sodium in an amount lower than 200 mg/litre, preferably sodium in an amount lower than 50 mg/litre.

According to a possible aspect, during step (iv), the carbonated water in the tank flows outside the tank into a waste conduit or a compensating reservoir.

According to a possible aspect, the source of carbon dioxide supplies food-grade carbon dioxide.

Advantageously, the food-grade carbon dioxide allows to delay microbial growth, such as bacteria and fungi, in the carbonated water and allows to reduce the oxidation phenomena of the meat. Preferably, the food-grade carbon dioxide is carbon dioxide named E290 (defined as a food additive, i.e. refined and suitable for human consumption).

A further aspect of the present invention relates to a method for treating and preserving fish products, preferably molluscs or crustaceans, by means of carbonated water, comprising the steps of:
(i) supplying said tank with carbonated water from a first loop, said water having temperatures and pH value which are pre-set and stored in a control unit or in storage means connected to said control unit;
(ii) monitoring the temperature and the pH value of the carbonated water in said tank by means of at least one temperature sensor and at least one pH sensor which are connected to said control unit;
(iii) keeping one or more portions of fish products in the carbonated water in said tank at said pre-set temperature and said pre-set pH value;
(iv) comparing by means of said control unit, said measured pH value with said stored pH value or range of values, and supplying carbonated water to the tank from said first loop in the event that the carbonated water present in the tank has a measured pH value different from said one or said more desired and stored pH values;
(v) recirculating the carbonated water present in the tank through a second loop comprising at least one filtering element and at least one disinfecting element.

Advantageously, the method for treating and preserving fish products, preferably molluscs or crustaceans, allows to reduce, by means of the carbonated water, the amount of ammonia produced during the degradation process of the proteins of the fish products, thus increasing the preservation time of the fish products before consumption and without causing an alteration in taste and appearance.

### BRIEF DESCRIPTION OF THE FIGURES

With reference to the accompanying figures, exemplary and non-limiting embodiments of the present invention are now described, wherein:
- Figure 1 is a schematic view of the apparatus for treating and preserving food by means of carbonated water;
- Figure 2 is a schematic view of the control exerted by the control unit of the apparatus of figure 1 in which the control of the pH value of the carbonated water in a tank of the apparatus of figure 1 is schematically shown;
- Figure 3 is a schematic view of the control exerted by the control unit of the apparatus of figure 1 in which the control of the temperature value of the carbonated water in a tank is schematically shown;
- Figure 4 is a perspective view of a grid for supporting food, which can be placed in a tank of the apparatus of figure 1.
- Figure 5 is a perspective view of the apparatus of figure 1;

### DETAILED DESCRIPTION

An apparatus 100 for treating and preserving food 1 by means of carbonated water 2 comprises a tank 6 adapted to contain carbonated water 2 and one or more food portions 1.

The apparatus further comprises a refrigeration unit 401. Preferably, the tank 6 comprises an anti-condensation barrier 65 placed in contact with the inner surface of the tank.

The apparatus further comprises a control unit 5, at least one temperature sensor 9 and at least one pH sensor 90 which are configured to control the temperature and pH, respectively, of the carbonated water 2 in the tank 6 and are connected to said control unit 5.

In more detail, at least one temperature sensor 9 and at least one pH sensor 90 measure the temperature values and pH values of the carbonated water 2, respectively, present in the tank 6. The measured temperature and pH values of the carbonated water 2 are sent to the control unit 5 in the form of electric signals, such as voltage or electric current or in other forms known in the art.

The apparatus further comprises a first loop (a) for supplying carbonated water 2 to the tank 6. The first loop (a) comprises water supplying means 3, an activated carbon filter 71, a first cooling element 70, a carbonator pump 19, a carbon dioxide source 40 and a saturator 8 of water with carbon dioxide.

In more detail, the water coming from the water supplying means 3 passes through an activated carbon filter 71 so as to filter out impurities present in the water, such as chlorine and other undesired particles.

Downstream of the activated carbon filter 71, there is a pressure switch 190 that allows to verify the presence of filtered water under pressure.

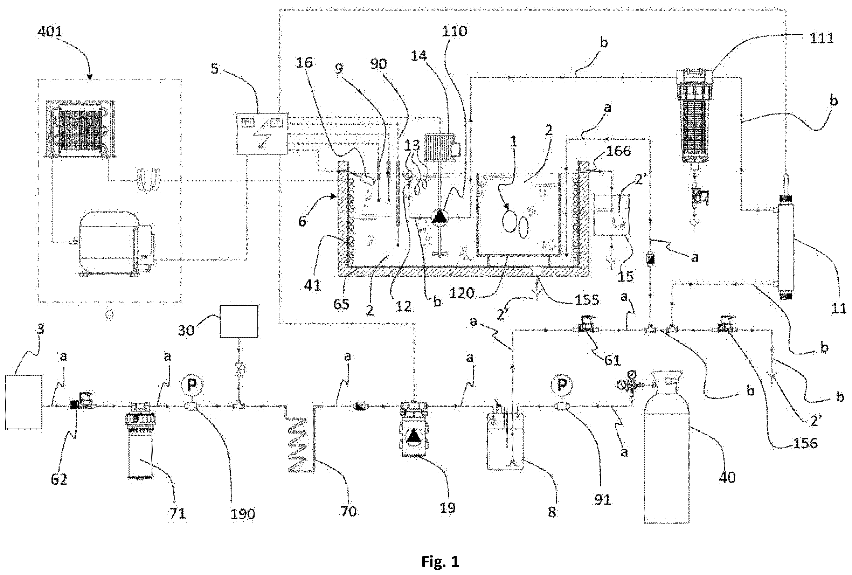

Downstream of the activated carbon filter 71 and downstream of the pressure switch 190, there is a first cooling element 70 that allows the water 3 filtered to be cooled through the filter 71. Downstream of the cooling element 70, there is a carbonator pump 19 useful for pressurising the water in the saturator 8. The filtered and cooled water is nebulized in a saturator 8. The carbon dioxide source 40 allows carbon dioxide to be supplied to the saturator 8. The saturator 8 allows carbonated water 2 to be obtained by nebulizing filtered and cooled water 3 and mixing it with carbon dioxide. The carbonated water 2 can flow to the tank 6 by means of the first loop (a), as e.g. shown in figure 1.

The first loop (a) is further equipped with solenoid valves 61,62 known in the art, which allow the flow of carbonated water 2 to be controlled in the tank 6.

According to a possible aspect, the apparatus further comprises a second loop (b) to recirculate the carbonated water 2 present in said tank 6. The second loop comprises a recirculation pump 110, a hydraulic trap 12, at least one filtering element 111 to separate undesired food portions 13 from the carbonated water 2, at least one disinfecting element 11 to disinfect the recirculated carbonated water 2, preferably said disinfecting element being a UV-C lamp.

More specifically, the second loop (b) allows carbonated water to be recirculated in the tank 6 in such a way as to remove undesired substances from the carbonated water 2 by means of the recirculation pump. The carbonated water 2 comprising undesired substances is flowed through at least one filtering element 111 which allows the carbonated water 2 to be separated from the undesired substances and at least one disinfecting element 11 allows the carbonated water 2 to be disinfected by germicidal action. The filtered carbonated water 2 flows out by means of the second loop (b) into the tank 6.

According to a possible aspect, the first loop (a) comprises a first sensor 190, preferably a pressure switch, for checking the presence of water in said first loop.

In more detail, the first sensor 190 allows an electric signal to be sent to the control unit 5 in the event that the amount of water 3 is insufficient for the production of carbonated water 2 in the saturator 8. In other words, in the event that the first sensor 190 measures a pressure value greater than 1.5 bar, the first sensor 190 sends an electric signal which is processed by the control unit 5 in order to activate the solenoid valve 62 and the carbonator pump 19 to be able to obtain water from the water supplying means 3. Alternately, the first sensor 90 in the event that it measures pressure values lower 1.5 bar, due to alteration in the function of the activated carbon filter 71, e.g., due to clogging of the filter 71 or due to the lack of water coming from the water supplying means 3, the first sensor 190 sends a signal to the control unit 5 so that the carbonator pump 19 is not allowed to start in order to prevent a dry running of the pump or, e.g., to allow the activated carbon filter 71 to be replaced.

According to a possible aspect, the first loop (a) comprises a second sensor 91, preferably a pressure switch, placed between said carbon dioxide source 40 and said saturator 8 for checking the presence of carbon dioxide from the carbon dioxide source 40.

In more detail, the second sensor 91 allows an electric signal to be sent to the control unit 5 in the event that there is a too little amount of carbon dioxide coming from the carbon dioxide source 40 to be able to produce carbonated water 2 in the saturator 8.

According to a possible aspect, the apparatus 100 comprises a container 120 placed in the tank 6 in order to contain a plurality of food portions 1.

According to a possible aspect, the tank 6 comprises a sensor 16 for controlling the level of the carbonated water 2.

In more detail, the sensor 16 for controlling the level of the carbonated water 2 in the tank 6 allows, therefore, to provide an electric signal to the control unit 5 in the event that the level of the carbonated water 2 in the tank 6 is lower than the desired volume. In the event that the level of the carbonated water 2 in the tank 6 is lower than the desired level, the control unit 5 provides an activation signal to activate the first loop (a) in order to supply carbonated water 2 to the tank 6 until the sensor 16 for controlling the level of the carbonated water 2 measures a level equal to the desired level of carbonated water.

According to a possible aspect, the apparatus comprises an outlet conduit 166, a compensating reservoir 15 to prevent the overflow of the carbonated water 2 from the tank 6 and a bottom outlet 155.

In more detail, the outlet conduit 166 allows the excess carbonated water 2' to flow out into the compensating reservoir 15.

Moreover, in the tank 6, there is a bottom outlet 155 which is useful for the periodic cleaning of the said tank. In other words, the bottom outlet 155 allows to remove the carbonated water 2 and thus allows the tank 6 to be cleaned.

Alternatively, the excess carbonated water 2 present in the tank 6 can flow out by opening a solenoid valve 156 placed upstream of the first loop (a) and the second loop (b).

According to a possible aspect, the tank 6 comprises a cooling evaporator 41 and a stirrer 14 to optimise the heat exchange between the evaporator 41 and the carbonated water 2 and to facilitate the displacement of the undesired food portions 13 towards a hydraulic trap 12.

The evaporator 41 allows the carbonated water 2 to be kept at the desired temperature. In the event that the temperature sensors 90 measure temperature values that are different from the temperature values pre-set and stored in the control unit 5, the control unit 5 may send an electric signal for activating the refrigeration unit 401 in order to make the refrigerating liquid flow out into the evaporator 8, which will allow to cool the carbonated water 2 until the temperature pre-set and stored in the control unit 5 is reached.

The stirrer 41, known in the art, is characterised by a motor connected to a rotary element at the end of which blades may be present to allow the carbonated water 2 to be stirred in the tank 6. This rotation of the carbonated water allows the undesired food portions 13 to be displaced to the upper surface of the carbonated water 2 in the tank 6, thus facilitating the collection of the undesired food portions in the hydraulic trap 13. The undesired food portions 13 and the carbonated water 2 flow out of the tank 6 through the recirculation pump 110. The undesired food portions 13 are then separated from the carbonated water 2 in the filtering element 111 and disinfected in the disinfecting element 11. The filtered and disinfected carbonated water 2 can then return to the tank 6.

According to a possible aspect, the apparatus comprises a sanitising element 30 for cleansing the first loop (a) and the second loop (b) before or after the ageing
of the plurality of portions of meat 1.

The sanitising element 30 may be a dosing station consisting of a dosing pump capable of dosing a sanitising solution, e.g., based on hydrogen peroxide, or a container for containing a special sanitiser dosed manually.

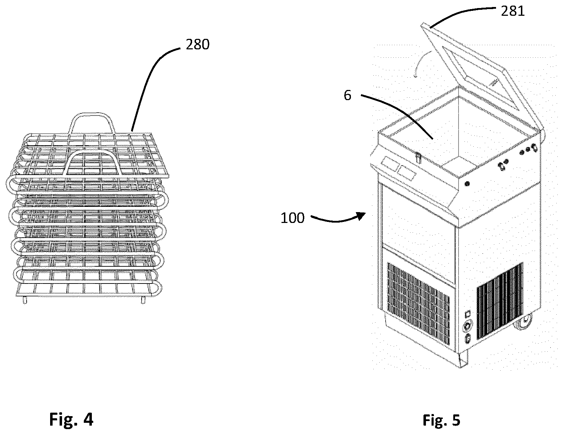

According to a possible aspect, the apparatus 100 comprises a supporting grid 280 for the plurality of food portions 1, as shown e.g. in figure 4.

The supporting grid 280 may be positioned inside the container 120 and allows the amount of food 1 in the tank 6 to be maximised by means of carbonated water 2, by minimising the contact between the different food portions 1 and ensuring that the plurality of food portions 1 is substantially restricted in movement or floating inside the container 120 when is submerged in carbonated water 2 but, at the same time, ensuring the continuous flow of carbonated water 2 around the surface of the plurality of food portions 1.

Preferably the supporting grid 280 is made of metal material, even more preferably it is made of stainless steel comprising chromium in a percentage equal to 18% and nickel in a percentage equal to 10%.

According to a possible aspect, the tank 6 comprises an openable and insulated top lid 281, preferably made of glass.

The openable and insulated lid 281 allows, in use, the progress of the treatment and preservation of food 1 in the tank 6 by means of carbonated water 2 to be checked.

The invention further comprises a method for ageing meat 1 by means of carbonated water 2 in a tank 6 of an apparatus according to one of the preceding claims, comprising the steps of:
(i) supplying said tank 6 with carbonated water 2 from a first loop (a), said water having temperatures and pH value which are pre-set and stored in a control unit 5 or in storage means connected to said control unit;
(ii) monitoring the temperature and the pH value of the carbonated water 2 in said tank 6 by means of at least one temperature sensor 9 and at least one pH sensor 90 which are connected to said control unit 5;
(iii) keeping one or more portions of meat 1 in the carbonated water 2 in said tank at said temperature and said pH value for a period of time sufficient to reach the desired ageing;
(iv) comparing by means of said control unit 5, said measured pH value with said stored pH value or range of values, and supplying carbonated water 2 to the tank 6 from said first loop (a), in the event that the carbonated water 2 present in the tank 6 has a measured pH value different from said one or said more desired and stored pH values;
(v) recirculating the carbonated water 2 present in the tank 6 through a second loop (b) comprising at least one filtering element 111 and at least one disinfecting element 11.

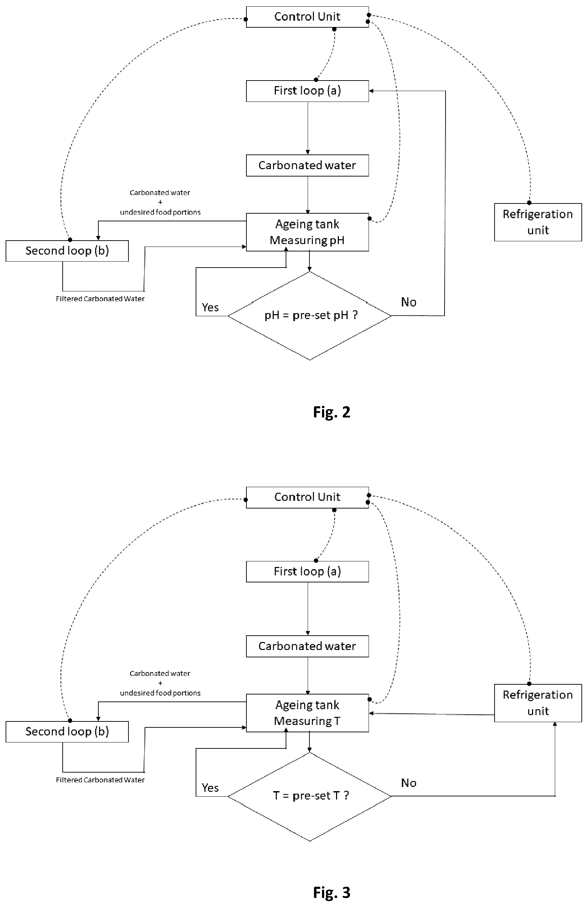

The carbonated water 2 produced by means of the first loop (a) flows into the tank 6 until the desired volume level is reached and measured by means of the sensor 16 for controlling the level of carbonated water 2 in the tank. At least one temperature sensor 9 and at least one pH sensor 90 measure the temperature value and the pH value of the carbonated water 2, respectively, present in the tank 6. The temperature values 9 and the measured pH values are processed by the control unit 5. In the event that the measured temperature value is different from the temperature value pre-set and stored in the control unit 5, the control unit may send a signal to the refrigeration unit 401 so that the refrigerant liquid present in the evaporator 41 flows out, to maximise the heat exchange between the evaporator 41 and the carbonated water 2 until the temperature measured by at least one temperature sensor 9 is equal to the temperature value pre-set and stored in the control unit, as e.g. schematically shown in figure 3.

In the event that the pH value measured by at least one pH sensor 90 is different from the pH value pre-set and stored in the control unit 5, the control unit 5 may send an activation signal to the first loop (a) in order to supply carbonated water 2 to the tank 6 by opening the solenoid valves 61,62 until the pH value measured by at least one pH sensor 90 is equal to the pH value pre-set and stored in the control unit, as shown e.g. in figure 2.

The second loop (b) allows the carbonated water 2 present in the tank 6 to be recirculated so that the undesired meat portions 13 can be filtered from the carbonated water 2. The undesired meat portions 13 are collected in the hydraulic trap 14 and separated from the carbonated water 2 in the filtering element 111.

The carbonated water 2 is subsequently disinfected by means of a filtering element 11 and made to flow into the tank 6.

According to a possible aspect, during step (i) or step (iv) in the first loop (a), the water coming from the supplying means 3 is pressurised to pressure values between 5 and 10 bar, by means of a carbonator pump 19 placed upstream of the saturator 8 and downstream of the first cooling element 70.

The carbonator pump 19 allows the water pressure to be increased before flowing into the saturator 8 in order to optimise the nebulization and mixing of carbon dioxide coming from the carbon dioxide source 40. Increasing the pressure of the water source 3 before reaching the saturator allows greater dissolution of carbon dioxide in the saturator 8.

According to a possible aspect, the pre-set temperature value of the carbonated water is between 3.0 °C and 6.0 °C, preferably between 4 °C and 4.5°C.

According to a possible aspect, the pH value of the carbonated water 2 is between 2.5 and 4.0, preferably between 3 and 3.5.

According to a possible aspect, the carbonated water 2 has hardness between 10 °F and 30 °F, preferably between 13 °F and 28 °F, and preferably contains sodium in an amount lower than 200 mg/litre, preferably lower than 50mg/litre.

According to a possible aspect, during step (iv), the carbonated water 2 present in the tank 6 flows outside the tank into a waste conduit 155 or a compensating reservoir 15.

According to a possible aspect, the carbon dioxide source 40 supplies food-grade carbon dioxide.

The invention further comprises a method for treating and preserving fish products 1, preferably molluscs or crustaceans, by means of carbonated water 2 in a tank 6 by means of carbonated water 2, comprising the steps of:
(i) supplying said tank 6 with carbonated water 2 from a first loop (a), said water having temperatures and pH value which are pre-set and stored in a control unit 5 or in storage means connected to said control unit;
(ii) monitoring the temperature and the pH value of the carbonated water 2 in said tank 6 by means of at least one temperature sensor 9 and at least one pH sensor 90 which are connected to said control unit 5;
(iii) keeping one or more portions of fish products 1 in the carbonated water 2 in said tank at said pre-set temperature and said pre-set pH value;
(iv) by means of said control unit 5, comparing said measured pH value with said stored pH value or range of values, and supplying carbonated water 2 to the tank 6 from said first loop (a) in the event that the carbonated water 2 present in the tank 6 has a measured pH value different from said one or said more desired and stored pH values;
(v) recirculating the carbonated water 2 present in the tank 6 through a second loop (b) comprising at least one filtering element 111 and at least one disinfecting element 11.

Advantageously, the method for treating and preserving fish products 1, preferably molluscs or crustaceans, by means of carbonated water 2 in a tank 6 containing carbonated water 2 allows to decrease the amount of ammonia produced during the process of degradation of fish products. In other words, treating by contacting the fish products 1 with the carbonated water 2 inside the tank 6 allows to minimise the presence of ammonia and, therefore, to increase the preservation time of the fish products 1 before subjecting them to further treatments, such as e.g. cooking, preserving, drying, smoking and the like.

Advantageously, during step ii), the monitoring of the pH of the carbonated water 2 in said tank 6, by means of at least one temperature sensor 9 and at least one pH sensor 90 which are connected to said control unit 5, allows the pH level to be regulated in the presence of ammonia released from fish products 1 immersed in the carbonated water 2.

Advantageously, in the event that the pH value measured by the pH sensor 90 in the carbonated water 2 in the presence of ammonia is different from the pH value pre-set and stored in the control unit 5, the control unit 5 may send an activation signal to the first loop (a) in order to supply carbonated water 2 to the tank 6 by opening the solenoid valves 61,62 until the pH value measured by at least one pH sensor 90 is equal to the pH value pre-set and stored in the control unit, as shown e.g. in figure 2.

Advantageously, it is thus possible to avoid treating fish products 1 with substances intended to reduce or eliminate the amount of ammonia produced during the natural degradation process of the fish products 1.

## Claims

1. Apparatus (100) for treating and preserving food (1) by means of carbonated water (2), comprising:
- a tank (6) adapted to contain carbonated water (2) and one or more food portions (1);
- a refrigeration unit (401);
- a control unit (5);
- at least one temperature sensor (9) and at least one pH sensor (90) which are configured to control the temperature and pH, respectively, of the carbonated water (2) in the tank (6) and are connected to said control unit;
- a first loop (a) for supplying carbonated water (2) to the tank (6), said first loop (a) comprising water supplying means (3), an activated carbon filter (71), a first cooling element (70), a carbonator pump (19), a carbon dioxide source (40) and a saturator (8) of water with carbon dioxide.

2. Apparatus according to claim 1, comprising a second loop (b) for recirculating the carbonated water (2) present in said tank, said second loop (b) comprising a recirculation pump (110), a hydraulic trap (12), at least one filtering element (111) to separate undesired food portions (13) from the carbonated water (2), at least one disinfecting element (11) to disinfect the recirculated carbonated water (2), preferably said disinfecting element being a UV-C ultraviolet lamp.

3. Apparatus according to claim 1 or 2, wherein the first loop (a) comprises a first sensor (190), preferably a pressure switch, for checking the presence of water in said first loop.

4. Apparatus according to one of the preceding claims, wherein the first loop (a) comprises a second sensor (91), preferably a pressure switch, placed between said carbon dioxide source and said saturator for checking the presence of carbon dioxide from the carbon dioxide source (40).

5. Apparatus according to one of the preceding claims, comprising a container (120) placed in the tank (6) in order to contain a plurality of food portions (1).

6. Apparatus according to one of the preceding claims, wherein the tank (6) comprises a sensor (16) for controlling the level of carbonated water (2).

7. Apparatus according to one of the preceding claims, wherein the apparatus comprises an outlet conduit (166) in the tank (6), a compensating reservoir (15) to prevent the overflow of the carbonated water (2) from the tank (6) and a bottom outlet conduit (155).

8. Apparatus according to one of the preceding claims, wherein the tank (6) comprises a cooling evaporator (41) and a stirrer (14) to optimise the heat exchange between the evaporator (41) and the carbonated water (2) and to facilitate the displacement of undesired food portions (13) towards the hydraulic trap (12).

9. Apparatus according to one of the preceding claims, wherein the apparatus comprises a sanitising element (30) for cleansing the first loop (a) and the second loop (b).

10. Apparatus according to one of the preceding claims, wherein the apparatus comprises a supporting grid (280) for the plurality of food portions (1).

11. Apparatus according to one of the preceding claims, wherein the tank (6) comprises an openable and insulated top lid (281), preferably made of glass.

12. Method for ageing meat (1) by means of carbonated water (2) in a tank (6) of an apparatus according to one of the preceding claims, comprising the steps of:
(i) supplying said tank (6) with carbonated water (2) from a first loop (a), said water having temperatures and pH value which are pre-set and stored in a control unit (5) or in storage means connected to said control unit;
(ii) monitoring the temperature and the pH value of the carbonated water (2) in said tank (6) by means of at least one temperature sensor (9) and at least one pH sensor (90) which are connected to said control unit (5);
(iii) keeping one or more portions of meat (1) in the carbonated water (2) in said tank at said temperature and said pH value for a period of time sufficient to reach the desired ageing;
(iv) comparing by means of said control unit (5), said measured pH value with said stored pH value or range of values, and supplying carbonated water (2) to the tank (6) from said first loop (a), in the event that the carbonated water (2) present in the tank (6) has a measured pH value different from said one or said more desired and stored pH values;
(v) recirculating the carbonated water (2) present in the tank (6) through a second loop (b) comprising at least one filtering element (111) and at least one disinfecting element (11), preferably said disinfecting element being a UV-C ultraviolet lamp.

13. Method for treating and preserving fish products (1), preferably molluscs or crustaceans, by means of carbonated water (2) in a tank (6) of an apparatus according to one of claims 1 to 11, comprising the steps of:
(i) supplying said tank (6) with carbonated water (2) from a first loop (a), said water having temperatures and pH value which are pre-set and stored in a control unit (5) or in storage means connected to said control unit;
(ii) monitoring the temperature and the pH value of the carbonated water (2) in said tank (6) by means of at least one temperature sensor (9) and at least one pH sensor (90) which are connected to said control unit (5);
(iii) keeping one or more portions of fish products (1) in the carbonated water (2) in said tank at said pre-set temperature and said pre-set pH value;
(iv) comparing by means of said control unit (5), said measured pH value with said stored pH value or range of values, and supplying carbonated water (2) to the tank (6) from said first loop (a), in the event that the carbonated water (2) present in the tank (6) has a measured pH value different from said one or said more desired and stored pH values;
(v) recirculating the carbonated water (2) present in the tank (6) through a second loop (b) comprising at least one filtering element (111) and at least one disinfecting element (11).

14. Method according to claim 12 or 13, wherein during step (i) or step (iv) in the first loop (a), the water coming from the supplying means (3) is pressurised to pressure values between 5 and 10 bar, by means of a carbonator pump (19) placed upstream of the saturator (8) and downstream of the first cooling element (70).

15. Method according to claim 12 or 13, wherein the pre-set temperature value of the carbonated water (2) is between 3.0°C and 6.0°C, preferably between 4°C and 4.5°C and/or wherein the pre-set pH value of the carbonated water (2) is between 2.5 and 4.0, preferably between 3 and 3.5 and/or wherein said carbonated water (2) has hardness between 10°F and 30°F, preferably between 13°F and 28°F and/or wherein said carbonated water (2) contains sodium in an amount lower than 200 mg/litre, preferably lower than 50 mg/litre.

16. Method according to claim 12 or 13, wherein during step (iv) the carbonated water (2) present in the tank (6) flows outside the tank into a waste conduit (155) or a compensating reservoir (15).
